# DEMANDE DE BREVET EUROPEEN

(11) **EP 1 407 812 A1**
(43) Date de publication de la demande: **14.04.2004**
(21) Numéro de dépôt: 03103696.5
(22) Date de dépôt: 06.10.2003
(51) Int. Cl.: B01F 13/08, B03C 1/28, B01F 13/00, B01D 19/00

(54) **Dispositif pour le melange de fluides**

(30) Priorité: 08.10.2002 FR 0212468
(71) Demandeur: COMMISSARIAT A L'ENERGIE ATOMIQUE, 75752 Paris Cedex 15 (FR)
(72) Inventeur: Berthier, Jean, 38240, Meylan (FR); Masse, Dominique, 38500, Coublevie (FR)
(74) Mandataire: Poulin, Gérard

(57) **Abrégé**

L'invention concerne un dispositif pour le mélange de fluides.

Le dispositif comprend une chambre (C) dans laquelle sont présents les fluides à mélanger (L1, L2) et des moyens (ai, Ei) pour déplacer autour d'un point central, sous l'action d'une force, des particules présentes dans la chambre (C), la trajectoire des particules présentant des fluctuations radiales par rapport au point central.

L'invention s'applique aux mélanges de fluides et de colloïdes dans le domaine de la chimie ou de la biologie.

## Description

### Domaine technique et art antérieur

L'invention concerne un dispositif pour le mélange de fluides.

L'invention trouve une application particulièrement avantageuse pour la réalisation de micro-dispositifs pour le mélange de fluides et de colloïdes dans le domaine de la biologie ou de la chimie.

Dans la plupart des micro-systèmes de mélange de fluides existant, l'écoulement des fluides est lent et très laminaire. Des filets de fluides se côtoient sur une longue distance sans se mélanger. Il n'y a que très peu de mélanges par diffusion (cf. « *Optical measurement of transverse molecular diffusion in a microchannel »,* A.Evan-Kamholz, E.A. Shilling, P.Yager ; Biophysical-Journal, vol.80, n°4, Avril 2001, p.1967-72).

Dans le domaine de la chimie, le faible taux de mélange conduit à des réactions incomplètes et peu rapides. Dans le domaine de la biochimie, la faible efficacité de la diffusion empêche souvent un constituant biologique de migrer au sein d'un fluide porteur.

L'invention ne présente pas ces inconvénients.

### Exposé de l'invention

En effet, l'invention concerne un dispositif pour le mélange de fluides comprenant une chambre dans laquelle sont présents les fluides à mélanger. Le dispositif comprend des moyens pour déplacer autour d'un point central, sous l'action d'une force, des particules présentes dans la chambre, la trajectoire des particules présentant des fluctuations radiales par rapport au point central.

Selon un premier mode de réalisation de l'invention, les particules sont des billes paramagnétiques et les moyens pour déplacer les particules comprennent des moyens pour établir un champ magnétique tournant autour du point central.

Selon une première variante du premier mode de réalisation de l'invention, les moyens pour établir un champ magnétique tournant autour du point central comprennent des aimants permanents tournant autour du point central et un noyau ferromagnétique placé au niveau du point central.

Selon une deuxième variante du premier mode de réalisation de l'invention, les moyens pour établir un champ magnétique tournant autour du point central comprennent des électro-aimants et un noyau ferromagnétique placé au niveau du point central.

Selon un deuxième mode de réalisation de l'invention, les particules sont des molécules d'au moins un des fluides à mélanger et les moyens pour déplacer les particules comprennent des moyens pour établir un champ diélectrophorétique tournant autour du point central.

Selon une caractéristique supplémentaire du deuxième mode de réalisation de l'invention, les moyens pour établir un champ diélectrophorétique tournant autour du point central comprennent un noyau diélectrique placé au niveau du point central, la constante diélectrique du noyau diélectrique ayant une valeur supérieure à la constante diélectrique des fluides à mélanger, et des couples d'électrodes placés en périphérie de la cavité, deux électrodes d'un couple étant situées à l'opposé l'une de l'autre, de part et d'autre de la cavité, les couples d'électrodes étant alimentés tour à tour, en tournant autour du noyau diélectrique, par un courant alternatif.

Un avantage de l'invention est la possibilité de réaliser un micro-système de mélange très compact. Du fait de la rotation autour d'un noyau central, on peut faire décrire aux billes/molécules des trajets relativement longs dans un espace réduit. Une solution linéaire serait beaucoup moins efficace.

Un autre avantage de l'invention est l'efficacité du mélange obtenu. En effet, les excursions radiales des particules autour du noyau central provoquent une diffusion très efficace. Il est alors avantageux de dimensionner l'espace dans lequel s'effectue le mélange et de choisir la fréquence des champs tournants de façon à maximiser ces excursions. Le mouvement radial des particules conduit à augmenter fortement le coefficient de diffusion d'une espèce dans une autre.

Un troisième avantage est qu'il n'est pas nécessaire que les espèces aient des caractéristiques diélectriques différentes. Du moment que ces espèces sont brassées par des billes en mouvement autour du noyau central (1^{er} mode de réalisation) ou mises elles-mêmes en mouvement autour du noyau central (2^{ème} mode de réalisation), elles se mélangent.

Un quatrième avantage est que l'on peut mélanger plus de deux espèces. Cet avantage est particulièrement important dans le domaine de la chimie où il arrive souvent que les réactions nécessitent plusieurs constituants.

### Brève description des figures

D'autres caractéristiques et avantages de l'invention apparaîtront à la lumière de modes de réalisation préférentiels fait en référence aux figures jointes, parmi lesquelles :
- la figure 1 représente un schéma de principe de dispositif de mélange selon un premier mode de réalisation de l'invention ;
- la figure 2 représente un exemple de dispositif de mélange selon le premier mode de réalisation de l'invention ;
- la figure 3 représente un schéma de principe de dispositif de mélange selon un deuxième mode de réalisation de l'invention ;
- les figures 4A et 4B représentent une vue de dessus et une vue de côté d'un exemple de dispositif de mélange selon le deuxième mode de réalisation de l'invention.

### Description détaillée de modes de mises en oeuvre de l'invention

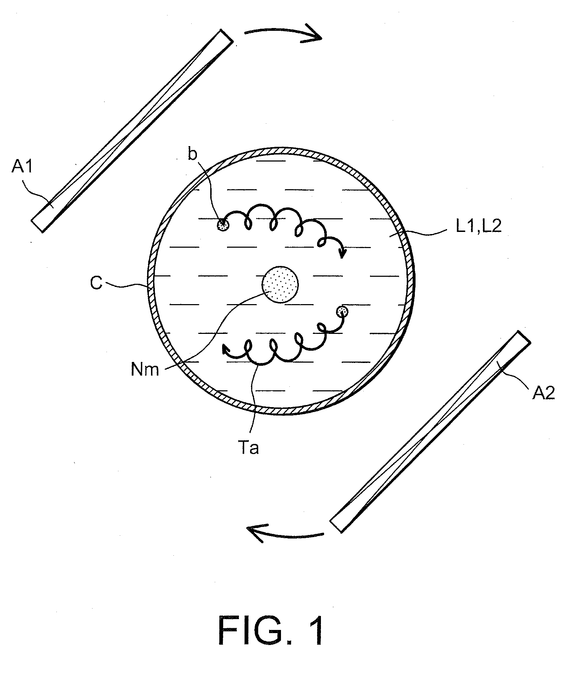

La figure 1 représente un schéma de principe de dispositif de mélange selon un premier mode de réalisation de l'invention.

Le dispositif comprend une chambre C qui contient les liquides L1, L2 à mélanger, un noyau ferromagnétique Nm préférentiellement centré dans la chambre C, des moyens magnétiques A1, A2 aptes à créer un champ magnétique tournant autour du noyau ferromagnétique et des billes paramagnétiques b dispersées dans la chambre C (par exemple des billes de type Dynal, Inimunicon ou Miltenyi). Les moyens magnétiques A1, A2 peuvent être des aimants permanents animés d'un mouvement de rotation ou des électro-aimants alimentés tout à tour.

Sous l'action du champ magnétique tournant, les billes paramagnétiques b se déplacent autour du noyau ferromagnétique selon une trajectoire Ta qui présente des fluctuations radiales par rapport au noyau ferromagnétique. Les mouvements de fluctuation radiale des billes paramagnétiques brassent les particules de liquide et contribuent à augmenter considérablement le coefficient de diffusion d'un liquide dans l'autre.

Les fluctuations radiales des billes paramagnétiques varient, entre autres, en fonction de la susceptibilité magnétique des billes b et de la fréquence de rotation du champ magnétique. La susceptibilité magnétique des billes paramagnétiques et la fréquence de rotation du champ magnétique constituent alors des paramètres de réglage pour le mélange des liquides.

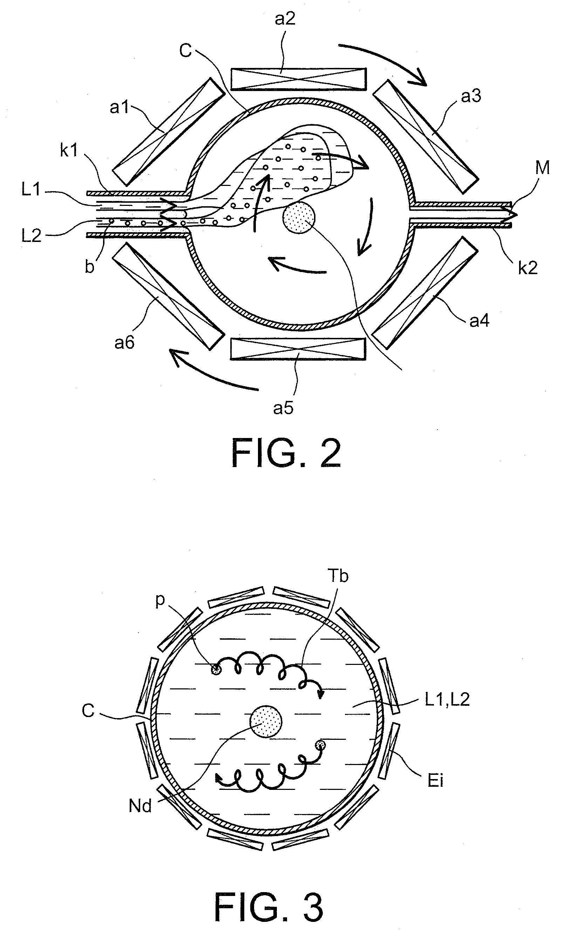

La figure 2 représente un exemple de dispositif de mélange selon le premier mode de réalisation de l'invention.

Le dispositif de mélange comprend des électro-aimants ai (i=1, 2, ..., 6) régulièrement répartis à la périphérie de la chambre C et un noyau ferromagnétique central Nm. Les liquides L1, L2 destinés à être mélangés sont introduits dans la chambre C par un canal d'entrée k1. Un canal de sortie k2 permet d'extraire le mélange M de liquides. Les billes paramagnétiques b sont introduites dans la chambre C, par exemple, avec le liquide L2. Dans le cas d'un mélange de fluides avec un liquide porteur (mélange de constituants en biochimie), le liquide porteur peut être préalablement introduit dans la chambre C.

La figure 3 représente un schéma de principe de dispositif de mélange selon un deuxième mode de réalisation de l'invention.

Le deuxième mode de réalisation de l'invention met en oeuvre l'utilisation de forces diélectrophorétiques.

La diélectrophorèse est une technique connue pour produire une force électrique sur des particules ou de grosses molécules diélectriques en suspension dans un liquide tampon, sans pour autant qu'il y ait apparition d'un courant électrique. Le champ électrique nécessaire pour induire une force diélectrophorétique est produit par des électrodes alimentées par un courant alternatif de fréquence relativement élevée (10 à 100 KHz). La force appliquée est alors proportionnelle au gradient du carré du champ électrique efficace. Suivant la fréquence du champ et les caractéristiques physiques des particules, on peut obtenir une force positive (dirigée vers les régions de champ moyen fort) ou négative (dirigée vers les régions de champ moyen faible).

Les principales applications connues sont dans le domaine de la séparation d'espèces ou de constituants, en faisant utilisation de la diélectrophorèse positive ou négative. Par exemple, on peut séparer des cellules, des bioparticules ou des bactéries ayant des propriétés diélectrophorétiques différentes (cf. l'article *« Microfluidic cell separation by 2-dimensional dielectrophoresis »,* Biomedical Microdevices 2 :1, pp 41-49, 1999 et l'article « *Introducing electrophoresis as a new force field for field-flow fractionation* », Biophysical Journal, vol.73, pp 1118-1129, 1997).

Le dispositif de mélange selon le deuxième mode de réalisation de l'invention comprend une chambre C qui contient les liquides à mélanger, un noyau diélectrique Nd préférentiellement centré dans la chambre C et des électrodes Ei (i=1, 2, ..., n) alimentées en courant alternatif et régulièrement réparties à la périphérie de la chambre C.

La chambre C peut avantageusement être de très petites dimensions (dimensions typiques de 100µm à 2mm). Les électrodes sont associées par couples d'électrodes, les électrodes d'un même couple étant situées à l'opposé l'une de l'autre, de part et d'autre de la chambre C. Les couples d'électrodes sont alimentés tour à tour, en tournant autour du noyau diélectrique, selon une vitesse d'alimentation, par exemple, de l'ordre de 1rd/s à 100rd/s. La vitesse d'alimentation des couples l'électrodes est choisie en fonction du type de particules à mélanger. La permittivité ε_{c} du noyau diélectrique est plus forte que la permittivité des fluides à mélanger. Préférentiellement, les électrodes sont électriquement isolées des fluides afin d'éviter les effets d'ionisation locale au contact des électrodes. La fréquence ƒ_{*elec*} du courant alternatif qui alimente les électrodes est choisie en fonction des constituants à mélanger. Elle est généralement comprise entre 1KHz et 100KHz.

Les particules p des liquides à mélanger se déplacent autour du noyau diélectrique selon un trajectoire Tb qui présente des fluctuations radiales plus ou moins importantes en fonction de la fréquence *ƒ*_{*rot*} de l'alimentation des couples d'électrodes et de la fréquence *ƒ*_{*elec*} du courant alternatif qui alimente les électrodes. La fréquence *ƒ*_{*elec*} du courant électrique qui alimente les électrodes détermine le coefficient positif ou négatif de la force qui s'applique sur une particule. La fréquence *ƒ*_{*rot*} de rotation de l'alimentation des électrodes détermine la vitesse et l'amplitude du mouvement de rotation et du mouvement radial des particules.

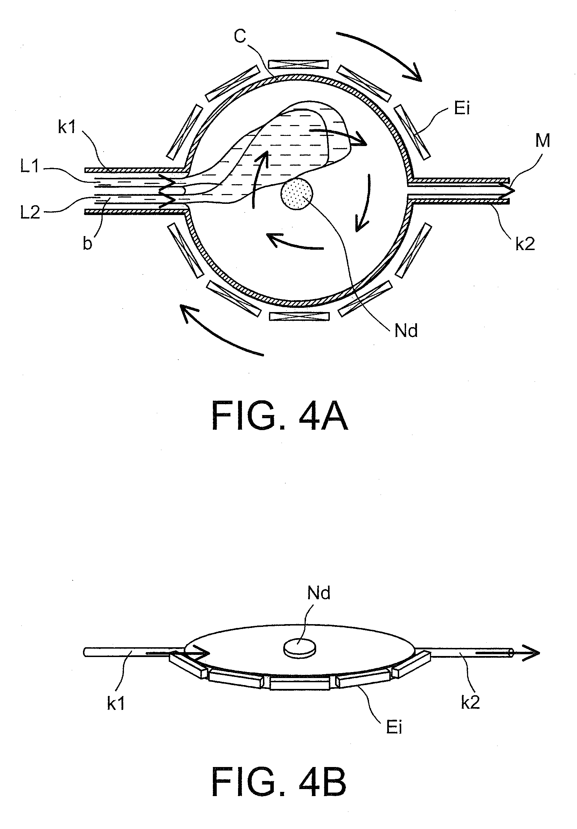

Les figures 4A et 4B représentent une vue de dessus et une vue de côté d'un exemple de dispositif de mélange selon le deuxième mode de réalisation de l'invention.

Le dispositif de mélange comprend des électrodes Ei (i=1, 2, ..., 10) régulièrement réparties autour de la chambre C et un noyau diélectrique central Nd. Les liquides L1, L2 destinés à être mélangés sont introduits dans la chambre C par un canal d'entrée k1. Un canal de sortie k2 permet d'extraire le mélange M de liquides. Ici aussi, dans le cas d'un mélange de fluides avec un liquide porteur (mélange de constituants en biochimie), le liquide porteur peut être préalablement introduit dans la chambre C.

Le principe de l'invention repose sur une similitude entre la force diélectrophorétique et la force magnétique. Dans le premier cas (diélectrophorèse), la force est proportionnelle au gradient du carré du champ électrique moyen (RMS) et, dans le second cas (magnétisme), la force est proportionnelle au gradient du carré du champ magnétique. Il a été montré par calcul une similitude complète entre la répartition d'un champ magnétique et la répartition d'un champ diélectrophorétique dans une géométrie semblable (champ magnétique extérieur uniforme entre 2 aimants (cas du magnétisme) ou champ diélectrophorétique entre 2 électrodes (cas de la diélectrophorèse).

Différents exemples d'application de l'invention peuvent être donnés. En biologie, il est fréquent que l'on veuille accélérer le processus de diffusion pour permettre à des cibles mobiles de s'approcher de sondes immobilisées. Il est alors possible, par exemple, de plaquer la surface de capture sur le noyau central du dispositif selon l'invention, ce qui permet alors d'augmenter la vitesse de capture. En chimie, les réactions exigent souvent l'obtention de mélanges poussés dont les proportions sont bien définies (proportions stoechiométriques). Le mélangeur selon l'invention répond particulièrement bien à cette exigence.

## Revendications

1. Dispositif pour le mélange de fluides comprenant une chambre (C) dans laquelle sont présents les fluides à mélanger (L1, L2), **caractérisé en ce qu'**il comprend des moyens (ai, Ei) pour déplacer autour d'un point central, sous l'action d'une force, des particules présentes dans la chambre (C) , la trajectoire des particules présentant des fluctuations radiales par rapport au point central.

2. Dispositif selon la revendication 1, **caractérisé en ce que** les particules sont des billes paramagnétiques (b) et **en ce que** les moyens pour déplacer les particules comprennent des moyens pour établir un champ magnétique tournant autour du point central.

3. Dispositif selon la revendication 2, **caractérisé en ce que** les moyens pour établir un champ magnétique tournant autour du point central comprennent des aimants permanents (A1, A2) tournant autour du point central et un noyau ferromagnétique (Nm) placé au niveau du point central.

4. Dispositif selon la revendication 2, **caractérisé en ce que** les moyens pour établir un champ magnétique tournant autour du point central comprennent des électro-aimants (ai) et un noyau ferromagnétique (Nm) placé au niveau du point central.

5. Dispositif selon la revendication 1, **caractérisé en ce que** les particules sont des molécules (p) d'au moins un des fluides à mélanger et **en ce que** les moyens pour déplacer les particules comprennent des moyens pour établir un champ diélectrophorétique tournant autour du point central.

6. Dispositif selon la revendication 5, **caractérisé en ce que** les moyens pour établir un champ diélectrophorétique tournant autour du point central comprennent un noyau diélectrique (Nd) placé au niveau du point central, la constante diélectrique (ε_{c}) du noyau diélectrique ayant une valeur supérieure à la constante diélectriques des fluides à mélanger, et des couples d'électrodes (Ei) placés en périphérie de la cavité, les deux électrodes d'un couple étant situées à l'opposé l'une de l'autre, de part et d'autre de la cavité (C), les couples d'électrodes étant alimentés tour à tour, en tournant autour du noyau diélectrique, par un courant alternatif.

7. Dispositif selon la revendication 6, **caractérisé en ce que** les électrodes (Ei) sont électriquement isolées des fluides à mélanger afin d'éviter une ionisation locale des fluides.

8. Dispositif selon la revendication 6 ou 7, **caractérisé en ce que** la fréquence du courant alternatif qui alimente les électrodes (Ei) est comprise entre 1kHz et 100kHz.
